# EUROPÄISCHE PATENTSCHRIFT

(11) **EP 2 164 784 B1**
(45) Veröffentlichungstag und Bekanntmachung des Hinweises auf die Patenterteilung: **13.04.2016**
(21) Anmeldenummer: 08758838.0
(22) Anmeldetag: 28.05.2008
(51) Int. Cl.: B65G 47/244, B65B 35/58

(54) **AUSRICHTEN VON LEBENSMITTELPRODUKTEN**
ALIGNMENT OF FOOD PRODUCTS
ALIGNEMENT DE PRODUITS ALIMENTAIRES

(30) Priorität: 01.08.2007 DE 102007036020
(43) Veröffentlichungstag der Anmeldung: 24.03.2010
(73) Patentinhaber: Weber Maschinenbau GmbH Breidenbach, 35236 Breidenbach (DE)
(72) Erfinder: WEBER, Günther, 17094 Gross Nemerow (DE)
(74) Vertreter: Manitz, Finsterwald & Partner GbR
(86) Internationale Anmeldenummer: PCT/EP2008/004255
(87) Internationale Veröffentlichungsnummer: WO 2009/015714

(56) Entgegenhaltungen:
- DE-C1- 4 037 593
- US-A1- 2006 151 296

## Beschreibung

Die Erfindung betrifft ein Verfahren sowie eine Vorrichtung zum Ausrichten von Lebensmittelprodukten.

Eine Ausrichtvorrichtung für Stückgut ist aus US 2006/0151296 A1 bekannt.

Bei der Handhabung von Lebensmittelprodukten besteht generell das Problem, dass die Produkte, wenn sie einem System zugeführt werden, das einen bestimmten Arbeitsprozess durchführen soll, nicht so ausgerichtet - d.h. positioniert und orientiert - sind, dass dieses System fehlerfrei arbeitet. Die Produkte können beispielsweise verdreht und/oder seitlich verschoben sein. Es ist daher erforderlich, Maßnahmen zu treffen, um die Produkte entsprechend den Anforderungen des jeweiligen Systems auszurichten.

Ein Beispiel, bei dem sich dieses Problem grundsätzlich stellt, ist eine Verarbeitungslinie, die als vorgelagertes System einen Hochgeschwindigkeitsslicer und als nachgeschaltetes System eine Verpackungsmaschine umfasst. Mit dem Slicer werden Lebensmittelprodukte mit hoher Geschwindigkeit aufgeschnitten, wobei Portionen gebildet werden, die jeweils aus einer Mehrzahl von Produktscheiben bestehen und beispielsweise in Form eines Stapels oder einer Schindelung vorliegen können. Diese Portionen werden mit Fördereinrichtungen, die dem Slicer nachgeordnet sind, einer Verpackungsmaschine zugeführt. Die Förderstrecke zwischen Slicer und Verpackungsmaschine kann in hohem Maße komplex aufgebaut sein und beispielsweise verschiedene Wäge-, Sortier-, Einlege- und Gruppiereinrichtungen umfassen, wobei die Praxis auch fordert, dass von mehreren Slicern kommende Produktströme zusammengeführt werden, um Portionen aus verschiedenen Lebensmittelprodukten zusammenzustellen und diese Zusammenstellungen anschließend zu verpacken. Aufgrund der vielfältigen Einflüsse auf die Portionen bei ihrer Erzeugung und ihrem Transport kann nicht immer sichergestellt werden, dass die Portionen, wenn sie die Verpackungsmaschine oder eine andere Einrichtung, bei der es auf eine genaue Positionierung und Orientierung der Portionen ankommt, erreichen, die jeweils erforderliche Ausrichtung aufweisen.

Maßnahmen zur Ausrichtung von Produkten und auch von Portionen aus mittels eines Slicers erzeugten Produktscheiben sind grundsätzlich bekannt. Portionen, die eine ausreichende Eigenstabilität aufweisen, z.B. Stapel aus Käsescheiben, können beispielsweise dadurch ausgerichtet werden, dass sie gegen einen Anschlag oder zwischen zwei vertikal angeordneten Bändern hindurchgefördert werden, wodurch die Portion korrekt ausgerichtet wird. Bei weniger stabilen Portionen ist eine derartige Art und Weise der Ausrichtung allerdings nicht möglich. Es ist auch bekannt, in die Förderstrecke für die Produkte eine Ausrichtstrecke zu integrieren, die ein geteiltes Förderband aufweist, wobei die Produkte gleichzeitig auf zwei parallel verlaufenden, unabhängig voneinander antreibbaren Teilbändern aufliegen. Indem die beiden Teilbänder mit einer von Null verschiedenen Relativgeschwindigkeit angetrieben werden, lässt sich eine Drehung der Produkte erzielen. Bei dieser Maßnahme kommt es zwangsläufig zu einer Relativbewegung zwischen den Produkten und der von den Teilbändern gebildeten Produktauflage, da sich die Teilbänder, auf denen das Produkt aufliegt, mit unterschiedlichen Geschwindigkeiten unter dem Produkt bewegen. Der hierdurch zwangsläufig auftretende Schlupf zwischen Produkt und Produktauflage ist für bestimmte Produktsorten problematisch und dieses Ausrichtprinzip ist daher in vielen Fällen nicht anwendbar. Hinzu kommt, dass sich die Auswirkung des Schlupfes aufgrund der unterschiedlichen Beschaffenheit bzw. Konsistenz der Produkte schlecht vorhersagen lässt. Eine gezielte Ausrichtung der Produkte, beispielsweise eine Drehung der Produkte um einen vorgegebenen Winkel, lässt sich daher in vielen Fällen nicht mit der gewünschten Genauigkeit realisieren. Häufig ist daher bei derartigen Systemen eine Nachregelung erforderlich, die einen höheren Aufwand und damit höhere Kosten mit sich bringt.

Aufgabe der Erfindung ist es, eine Möglichkeit zum Ausrichten von Lebensmittelprodukten zu schaffen, die einfach ist und zuverlässig funktioniert und insbesondere möglichst unabhängig von der Produktbeschaffenheit bzw. -konsistenz ist, wobei insbesondere außerdem die bei der Ausrichtung auf die Produkte einwirkenden Kräfte möglichst gering gehalten werden sollen.

Die Lösung dieser Aufgabe erfolgt durch die Merkmale des unabhängigen Verfahrensanspruchs sowie des unabhängigen Vorrichtungsanspruchs.

Bei dem erfindungsgemäßen Verfahren gelangen auf einem Eingangsförderer in einer Förderrichtung einlaufende Lebensmittelprodukte zu einer Ausrichtstation, an der die Produkte ausgerichtet und von der die ausgerichteten Produkte zu einem Ausgangsförderer gelangen, wobei eine Fehlausrichtung der Produkte bezüglich einer Sollausrichtung detektiert wird und die Ausrichtung der Produkte in Abhängigkeit von der Fehlausrichtung erfolgt. Die Ausrichtung der Produkte erfolgt dadurch, dass die Produkte auf einer Produktauflage der Ausrichtstation aufliegen und die Produktauflage zur Durchführung von Ausrichtbewegungen angesteuert wird, wobei die Ausrichtung der Produkte ohne Relativbewegung zwischen den Produkten und der Produktauflage auskommt.

Bei der erfindungsgemäßen Vorrichtung sind wenigstens ein Eingangsförderer, zumindest ein Ausgangsförderer, wenigstens eine zwischen dem Eingangsförderer und dem Ausgangsförderer angeordnete Ausrichtstation und zumindest ein Detektionsmittel vorgesehen, mit dem eine Fehlausrichtung der Produkte bezüglich einer Sollausrichtung detektierbar ist, wobei die Ausrichtstation eine Produktauflage für die Produkte aufweist, die zur Durchführung von Ausrichtbewegungen in Abhängigkeit von der Fehlausrichtung ansteuerbar ist, um die Produkte entsprechend der Sollausrichtung auszurichten. Die Produktauflage ist derart ausgebildet, dass bei der Durchführung der Ausrichtbewegungen die Produktauflage unter Beibehaltung der Relativlage zwischen Produktauflage und Produkten bewegbar ist.

Durch die Erfindung wird bei der Ausrichtung der Produkte eine Relativbewegung zwischen Produkt und Produktauflage vermieden. Hierdurch ist die erfindungsgemäße Produktausrichtung unabhängig von der Produktkonsistenz und -beschaffenheit. Außerdem lässt sich mit relativ geringem Aufwand eine hohe Genauigkeit bei der Ausrichtung erzielen. Die gewünschte Sollausrichtung der Produkte kann somit zuverlässig auf der Basis einer detektierten Fehlausrichtung sowie der daraus abgeleiteten Ansteuerung der Produktauflage erreicht werden. Auf eine Nachregelung kann zumindest in den meisten Fällen verzichtet werden. Ein weiterer Vorteil der Erfindung ist, dass störende Beschleunigungen der Produkte während der Ausrichtung vermieden werden. Insbesondere ist es nicht erforderlich, das Produkt zwischenzeitlich anzuhalten und erneut zu beschleunigen. Mit der Erfindung lässt sich folglich eine besonders schonende Handhabung der Produkte bei deren Ausrichtung realisieren.

In der Erfindung wird die Produktauflage als Ganzes bewegt, um die zur Herstellung der Sollausrichtung erforderlichen Ausrichtbewegungen durchzuführen. Dabei ist es möglich, dass die Produktauflage so ausgebildet ist, dass sie sowohl gedreht als auch seitlich verschoben werden kann. Hierdurch können Orientierung und Positionierung der Produkte korrigiert werden. Eine Ausrichtbewegung der Produktauflage kann somit aus einer Drehung und einer Translation zusammengesetzt werden. Hierdurch kann dem Produkt jede gewünschte Orientierung und Position bezüglich des nachgeschalteten Ausgangsförderers und damit der weiteren nachgeordneten Einrichtungen verliehen werden.

Die Ausrichtstation umfasst insbesondere einen Endlosbandförderer, dessen oberes Trum die Produktauflage bildet. Der Endlosbandförderer wird zur Durchführung der Ausrichtbewegungen als Ganzes bewegt, und zwar zusätzlich zu seiner eigentlichen Transportfunktion, die durch das umlaufende Endlosband gegeben ist. Hierbei können die Produkte folglich durch entsprechendes Bewegen dieses Korrekturbandes ausgerichtet werden, während sie innerhalb des Gesamtprozesses weitergefördert werden. Ein zum Zwecke des Ausrichtens erfolgendes Anhalten der Produkte und damit unnötige Produktbeschleunigungen werden hierdurch vermieden. Durch den Verzicht auf Produktstopps kommt es durch die Ausrichtung der Produkte auch nicht zu störenden Leistungsreduzierungen des Gesamtsystems.

Weitere Ausführungsformen der Erfindung sind auch in den abhängigen Ansprüchen, der Beschreibung sowie der Zeichnung angegeben.

Die Erfindung wird im Folgenden beispielhaft unter Bezugnahme auf die Zeichnung beschrieben. Es zeigen:
- Fig. 1: eine Ausführungsform einer erfindungsgemäßen Ausrichtvorrichtung, und
- Fig. 2: eine weitere Darstellung der Ausrichtvorrichtung von Fig. 1.

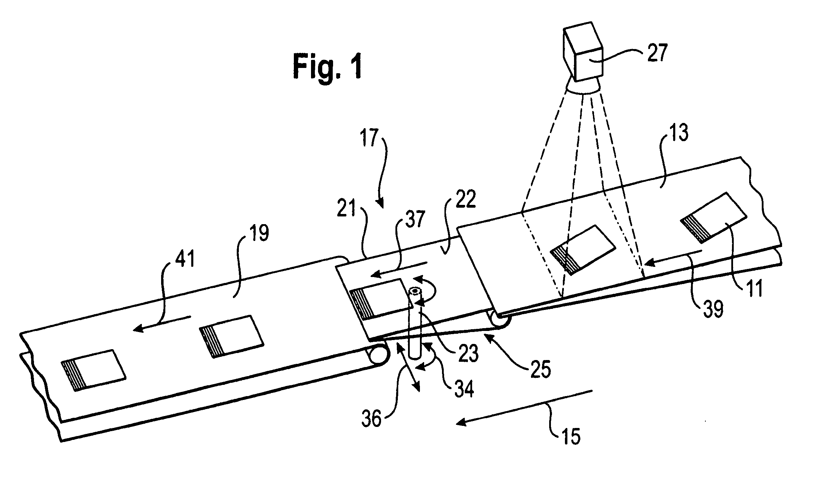

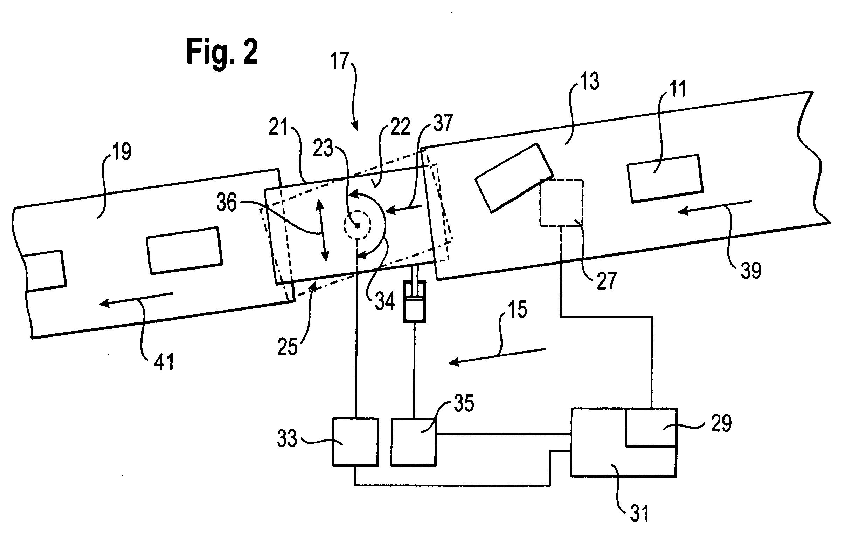

In den Fig. 1 und 2 ist ein Teil eines Gesamtsystems zur Verarbeitung von Lebensmittelprodukten dargestellt. Die gezeigte Vorrichtung umfasst einen als Endlosbandförderer ausgebildeten Eingangsförderer 13 sowie einen Ausgangsförderer 19, der ebenfalls ein Endlosförderband umfasst. Die generell durch einen Pfeil 15 angedeutete Förderrichtung der Vorrichtung ist durch die Förderrichtungen 39, 41 der Endlosbänder 13, 19 bestimmt, die in diesem Ausführungsbeispiel zusammenfallen. Dies ist jedoch nicht zwingend. Grundsätzlich können die Förderrichtungen 39, 41 der Endlosbandförderer 13, 19 auch einen von Null verschiedenen Winkel miteinander einschließen.

Das ausgangsseitige Ende des Eingangsförderers 13 und das eingangsseitige Ende des Ausgangsförderers 19 sind in Förderrichtung 15 mit Abstand voneinander angeordnet. Diese Lücke wird überbrückt durch einen weiteren Endlosbandförderer 25, der hier - wie auch der Eingangsförderer 13 - in Form eines so genannten Messerkantenbandes vorgesehen ist, das eine sich - in Transportrichtung 37 des Förderers 25 - verjüngende Keilform besitzt. Das Förderband 25 ist mit eingangsseitigem und ausgangsseitigem Überlapp zum Eingangsförderer 13 bzw. Ausgangsförderer 19 angeordnet. Durch diese Anordnung ist ein störungsarmer Übergang zwischen den einzelnen Förderern gewährleistet.

Der zwischengeschaltete Förderer 25 dient als Korrekturband und ist Bestandteil einer Ausrichtstation 17, die dazu dient, auf dem Eingangsförderer 13 einlaufende Produkte 11 so auszurichten, dass sie bei Übergabe auf den nachgeordneten Ausgangsförderer 19 eine jeweils gewünschte Orientierung und Position bezüglich des Ausgangsförderers 19 bzw. dessen Förderrichtung 41 besitzen, um an ein nicht dargestelltes, dem Ausgangsförderer 19 nachgeordnetes System, beispielsweise eine Verpackungsmaschine, in korrekter Orientierung und Positionierung übergeben werden zu können.

Bei den Produkten 11 handelt es sich beispielsweise um Portionen aus einer Mehrzahl von Lebensmittelscheiben, die von einem nicht dargestellten, dem Eingangsförderer 13 vorgelagerten Hochgeschwindigkeitsslicer erzeugt werden. Grundsätzlich ist die erfindungsgemäße Ausrichtstation 17 aber dazu in der Lage, beliebige Lebensmittelprodukte in der jeweils gewünschten Weise auszurichten, d.h. den Produkten die für ein nachgeordnetes System erforderliche Orientierung und Position zu verleihen.

Die Ausrichtstation 17 umfasst in dem hier erläuterten Ausführungsbeispiel außerdem zwei Antriebe 33, 35 (Fig. 2), die dazu dienen, den Endlosbandförderer 25 zur Durchführung von Ausrichtbewegungen 34, 36 als Ganzes relativ zum Eingangsförderer 13 und zum Ausgangsförderer 19 zu bewegen. Der eine Antrieb 33 sorgt für eine Drehung 34 des Förderers 25 um eine Achse 23. Die Achse 23 verläuft senkrecht zu der Auflagefläche 22, die von dem oberen Trum des Endlosbandes, also von der Produktauflage 21 des Förderers 25, gebildet wird.

Der andere Antrieb 35 dient dazu, das Endlosband 25 als Ganzes zu verschieben, wobei diese Verschiebung 36 senkrecht zur Förderrichtung 15, also senkrecht zu den Förderrichtungen 39, 41 des Eingangsförderers 13 und des Ausgangsförderers 19, verläuft.

Der Drehantrieb 33 und der Linearantrieb 35 sind mit einer zentralen Steuer- und/oder Regeleinrichtung 31 verbunden, die in Fig. 2 schematisch dargestellt ist. Die Einrichtung 31 umfasst eine Bildverarbeitungseinrichtung 29, die mit einem Kamerasystem 27 verbunden ist. Das Kamerasystem 27 ist oberhalb des Eingangsförderers 13 angeordnet. Das Blickfeld der Kamera 27 ist in Fig. 1 durch gestrichelte Linien angedeutet. Das Kamerasystem 27 bzw. die Bildverarbeitungseinrichtung 29 ist mit einer geeigneten Bildverarbeitungssoftware ausgestattet, mit der das System in der Lage ist, die Orientierung und die Position jedes einzelnen unter der Kamera 27 hindurch laufenden Produktes 11 relativ zu einem Bezug zu detektieren. Als Bezug kann beispielsweise eine Seitenkante des Endlosbandes 13 oder eine geeignete Markierung auf dem Endlosband 13 dienen. Die von der Kamera 27 für jedes einzelne Produkt 11 gelieferten Bilddaten können mittels der Bildverarbeitungseinrichtung 29 daraufhin untersucht werden, ob eine Fehlausrichtung des betreffenden Produktes 11 bezüglich einer Sollausrichtung vorliegt oder nicht. Die tatsächliche Position und Orientierung der Produkte 11 relativ zu der Sollausrichtung, also zu der Sollposition und der Sollorientierung, kann auf diese Weise folglich praktisch in Echtzeit ermittelt werden.

Die Sollorientierung ist z.B. eine Ausrichtung der Längsachse von zumindest im Wesentlichen rechteckigen Produkten 11 parallel zur Förderrichtung 39 des Eingangsförderers 13, während als Sollposition z.B. eine Anordnung der Produkte 11 in der Mitte - quer zur Förderrichtung 39 betrachtet - des Eingangsförderers 13 vorgegeben ist. Die Sollausrichtung kann auch bezüglich des Ausgangsförderers 19 festgelegt werden, da die Relativanordnung von Ausgangsförderer 19 und Eingangsförderer 13 bekannt ist. In den meisten oder zumindest in vielen praktischen Fällen ist ohnehin vorgesehen, dass der Eingangsförderer 13 und der Ausgangsförderer 19 - entsprechend dem Beispiel der Fig. 1 und 2 - mit zusammenfallenden Mittellängsachsen angeordnet sind.

Auf der Basis des von der Bildverarbeitungseinrichtung 29 gelieferten Resultates werden von der Einrichtung 31 die Antriebe 33, 35 der Produktauflage 21 derart angesteuert, dass die resultierenden Ausrichtbewegungen 34, 36 der Produktauflage 21 die Fehlausrichtung des betreffenden Produktes 11 korrigieren. Eine Drehung 34 des Korrekturbandes 25 ändert die Orientierung und eine Verschiebung 36 die Position der Produkte 11 bezüglich des Ausgangsförderers 19.

Da jeweils zum Zeitpunkt der Erfassung eines Produktes 11 durch das Kamerasystem 27 alle relevanten Parameter, insbesondere also die Bandgeschwindigkeit des Eingangsförderers 13, die Entfernung - in Förderrichtung 15 gesehen - des Produktes 11 zur Ausrichtstation 17, die Position des Produktes 11 auf dem Eingangsförderer 13 in Querrichtung, die mittels der Antriebe 33, 35 erzielbaren Verstellwege des Korrekturbandes 25 und die Bandgeschwindigkeit des Korrekturbandes 25, bekannt sind, ist der Steuer- und/oder Regeleinrichtung auch bekannt, mit welcher zeitlichen Verzögerung das Produkt 11 nach seiner Erfassung durch die Kamera 27 auf die Produktauflage 21 der Ausrichtstation 17 gelangt. Folglich sind die Voraussetzungen dafür gegeben, dass die Einrichtung 31 die jeweils erforderlichen Ausrichtbewegungen 34, 36 für jedes Produkt 11 stets zum richtigen Zeitpunkt initiieren kann.

Da erfindungsgemäß bei der Ausrichtung der Produkte 11 mittels der als Ganzes bewegbaren Produktauflage 21 jedweder Schlupf zwischen den Produkten 11 und der Auflagefläche 22 der Produktauflage 21 vermieden wird, sind unkalkulierbare Abweichungen von der aufgrund der bekannten Parameter vorhersagbaren Ausrichtung der Produkte 11 nach Abschluss des Ausrichtvorgangs praktisch ausgeschlossen. Eine wie auch immer geartete Nachregelung ist daher prinzipiell nicht erforderlich.

Dennoch ist es abweichend von dem in den Fig. 1 und 2 dargestellten Ausführungsbeispiel im Rahmen der Erfindung möglich, ein weiteres Kamerasystem oberhalb der Ausrichtstation 17 vorzusehen, mit welchem das Resultat eines ersten Ausrichtvorgangs, der auf der Basis der Daten des ersten, oberhalb des Eingangsförderers 13 angeordneten Kamerasystems 27 durchgeführt wurde, überprüft werden kann. Falls weiterhin eine Fehlausrichtung eines bereits auf der Produktauflage 21 befindlichen Produktes 11 vorhanden ist, kann ein weiterer Ausrichtvorgang durch erneute Ansteuerung der Antriebe 33, 35 durchgeführt werden, solange sich das während des Ausrichtens mittels des Endlosbandes 25 geförderte Produkt 11 noch auf der Produktauflage 21 befindet. Durch eine derartige "Feinausrichtung" kann erforderlichenfalls die Genauigkeit der Produktausrichtung weiter verbessert werden.

In einer weiteren alternativen Ausgestaltung der Erfindung kann das zur Erfassung einer Fehlausrichtung der Produkte 11 vorgesehene Kamerasystem 27 ausschließlich oberhalb der Ausrichtstation 17 angeordnet sein, so dass die Detektion einer Fehlausrichtung der Produkte 11 nicht bei noch auf dem Eingangsförderer 13, sondern bereits auf der Produktauflage 21 befindlichen Produkten 11 erfolgt. Die für eine Korrektur dieser Fehlausrichtung zur Verfügung stehende Zeit ist hierbei gegenüber einer frühzeitigeren Fehlausrichtungserfassung zwangsläufig verkürzt. In Abhängigkeit von der in Förderrichtung 15 vorhandenen Förderlänge des Endlosbandförderers 25 kann diese Variante im Rahmen von Anwendungen, bei denen hierdurch eine Leistungsreduzierung entweder tatsächlich nicht auftritt oder ohne weiteres tolerierbar ist, gleichwohl eine interessante Lösung darstellen.

### Bezugszeichenliste

- 11: Lebensmittelprodukt, Portion aus Lebensmittelscheiben
- 13: Eingangsförderer
- 15: Förderrichtung
- 17: Ausrichtstation
- 19: Ausgangsförderer
- 21: Produktauflage
- 22: Auflagefläche
- 23: Drehachse
- 25: Endlosbandförderer
- 27: Bildaufnahmeeinrichtung, Kamerasystem
- 29: Bildverarbeitungseinrichtung
- 31: Steuer- und/oder Regeleinrichtung
- 33: Drehantrieb
- 34: Drehbewegung
- 35: Linearantrieb
- 36: Verschiebung
- 37: Transportbewegung
- 39: Förderrichtung des Eingangsförderers
- 41: Förderrichtung des Ausgangsförderers

## Patentansprüche

1. Verfahren zum Ausrichten von Lebensmittelprodukten (11),
bei dem auf einem Eingangsförderer (13) in einer Förderrichtung (15) einlaufende Lebensmittelprodukte (11) zu einer Ausrichtstation (17) gelangen, an der die Produkte (11) ausgerichtet und von der die ausgerichteten Produkte (11) zu einem Ausgangsförderer (19) gelangen,
wobei eine Fehlausrichtung der Produkte (11) bezüglich einer Sollausrichtung detektiert wird und die Ausrichtung der Produkte (11) in Abhängigkeit von der Fehlausrichtung erfolgt,
wobei die Ausrichtung der Produkte (11) dadurch erfolgt, dass die Produkte (11) auf einer Produktauflage (21) der Ausrichtstation (17) aufliegen und die Produktauflage (21) zur Durchführung von Ausrichtbewegungen (34, 36) angesteuert wird,
wobei zur Durchführung der Ausrichtbewegungen (34, 36) die Produktauflage (21) als Ganzes relativ zu dem Ausgangsförderer (19) bewegt wird, und
wobei die Ausrichtung der Produkte (11) ohne Relativbewegungen zwischen den Produkten (11) und der Produktauflage (21) auskommt.

2. Verfahren nach Anspruch 1,
wobei die Ausrichtbewegungen (34, 36) der Produktauflage (21) einer zusätzlichen Transportbewegung (37) der Produktauflage (21), die dazu dient, die Produkte (11) mittels der Ausrichtstation (17) in Richtung des Ausgangsförderers (19) zu befördern, überlagert werden, wobei insbesondere die Ausrichtbewegungen (34, 36) von der zusätzlichen Transportbewegung (37) unabhängig sind, und/oder dass die Produktauflage (21) derart angesteuert wird, dass die Ausrichtbewegungen jeweils aus einer Mehrzahl von Einzelbewegungen (34, 36), insbesondere einer Drehbewegung und einer Translationsbewegung, zusammengesetzt sind, wobei die Einzelbewegungen (34, 36) zeitlich nacheinander, einander überlagert oder teilweise einander überlappend erfolgen.

3. Verfahren nach einem der vorhergehenden Ansprüche,
wobei zum Ausrichten der Produkte (11) die Produktauflage (21) gedreht, insbesondere um eine im Wesentlichen senkrecht zu einer Auflagefläche (22) der Produktauflage (21) verlaufende Drehachse (23), und/oder verschoben wird, insbesondere in einer im Wesentlichen parallel zu einer Auflagefläche (22) der Produktauflage (21) verlaufenden Ebene.

4. Verfahren nach einem der vorhergehenden Ansprüche,
wobei die Produkte (11) von dem Eingangsförderer (13) direkt an die Ausrichtstation (17) und/ oder von der Ausrichtstation (17) direkt an den Ausgangsförderer (19) übergeben werden, und/oder dass die Produkte (11), während sie ausgerichtet werden, gleichzeitig in Richtung des Ausgangsförderers (19) transportiert werden.

5. Verfahren nach einem der vorhergehenden Ansprüche,
wobei ein gleichzeitig mit dem Ausrichten der Produkte (11) erfolgender Produkttransport ebenfalls mittels der Ausrichtstation (17) durchgeführt wird, und/oder dass ein gleichzeitig mit dem Ausrichten der Produkte (11) erfolgender Produkttransport mittels eines Endlosbandförderers (25) durchgeführt wird, auf dessen oberem Trum die Produkte (11), während sie ausgerichtet werden, aufliegen und der zusätzlich zur Durchführung der Ausrichtbewegungen (34, 36) angesteuert wird.

6. Verfahren nach einem der vorhergehenden Ansprüche,
wobei die Ausrichtung der Produkte (11) bezüglich der Sollausrichtung mittels wenigstens einer Bildaufnahmeeinrichtung (27) ermittelt wird, dass die aufgenommenen Bilddaten einer Bildverarbeitungseinrichtung (29) zugeführt werden, und dass bei einer detektierten Fehlausrichtung der Produkte (11) mittels einer Steuer- und/oder Regeleinrichtung (31), die mit der Bildverarbeitungseinrichtung (29) kommuniziert, die Ausrichtstation (17) derart zur Durchführung von Ausrichtbewegungen (34, 36) angesteuert wird, dass die Fehlausrichtung beseitigt wird und die Produkte (11) entsprechend der Sollausrichtung orientiert sind.

7. Verfahren nach einem der vorhergehenden Ansprüche,
wobei die Ausrichtung der Produkte (11) bezüglich der Sollausrichtung mehrmals zeitlich nacheinander jeweils mittels wenigstens einer Bildaufnahmeeinrichtung (27) ermittelt wird, wobei dann, wenn im Anschluss an einen ersten Ausrichtvorgang, in den eine erste Bildaufnahmeeinrichtung (27) involviert ist, mittels einer weiteren Bildaufnahmeeinrichtung (27) weiterhin eine Fehlausrichtung der Produkte (11) detektiert wird, ein weiterer Ausrichtvorgang durchgeführt wird.

8. Verfahren nach einem der vorhergehenden Ansprüche,
wobei die Ausrichtung der Produkte (11) bezüglich der Sollausrichtung ausschließlich oder erstmals ermittelt wird, solange sich die Produkte (11) noch auf dem Eingangsförderer (13) oder bereits auf der Produktauflage (21) der Ausrichtstation (17) befinden, und/oder dass als Bezug für die Detektion einer Fehlausrichtung der Produkte (11) die Förderrichtung (39) des Eingangsförderers (13) verwendet wird, wobei insbesondere die Förderrichtung (41) des Ausgangsförderers (19) parallel zur Förderrichtung (39) des Eingangsförderers (13) verläuft.

9. Verfahren nach einem der vorhergehenden Ansprüche,
wobei die Produkte (11) Portionen sind, die jeweils von einer Mehrzahl von Lebensmittelscheiben gebildet werden, welche durch Aufschneiden von Lebensmittelprodukten mittels einer stromaufwärts, in Förderrichtung (15) gesehen, des Eingangsförderers (13) angeordneten Schneidevorrichtung, insbesondere eines Hochgeschwindigkeitsslicers, erhalten werden.

10. Vorrichtung zum Ausrichten von Lebensmittelprodukten (11), insbesondere zur Durchführung des Verfahrens nach einem der vorhergehenden Ansprüche,
mit wenigstens einem Eingangsförderer (13), zumindest einem Ausgangsförderer (19), wenigstens einer zwischen dem Eingangsförderer (13) und dem Ausgangsförderer (19) angeordneten Ausrichtstation (17),
die eine Produktauflage (21) für die Produkte (11) aufweist,
wobei die Produktauflage (21) derart ausgebildet ist, dass bei der Durchführung der Ausrichtbewegungen (34, 36) die Produktauflage (21) unter Beibehaltung der Relativlage zwischen Produktauflage (21) und Produkten (11) bewegbar ist,
**dadurch gekennzeichnet,**
**dass** zur Durchführung der Ausrichtbewegungen (34, 36) die Produktauflage (21) als Ganzes relativ zu dem Ausgangsförderer (19) bewegbar ist,
wobei die Vorrichtung zumindest ein Detektionsmittel (27) aufweist, mit dem eine Fehlausrichtung der Produkte (11) bezüglich einer Sollausrichtung detektierbar ist, und
wobei die Produktauflage zur Durchführung von Ausrichtbewegungen (34, 36) in Abhängigkeit von der Fehlausrichtung ansteuerbar ist, um die Produkte (11) entsprechend der Sollausrichtung auszurichten.

11. Vorrichtung nach Anspruch 10,
**dadurch gekennzeichnet,**
**dass** die Ausrichtstation (17) gleichzeitig eine Fördereinrichtung ist, mit der die Produkte (11) in Richtung des Ausgangsförderers (19) bewegbar sind und/oder dass die Ausrichtstation (17) derart zwischen dem Eingangsförderer (13) und dem Ausgangsförderer (19) angeordnet ist, dass die Produkte (11) von dem Eingangsförderer (13) direkt an die Ausrichtstation (17) und/oder von der Ausrichtstation (17) direkt an den Ausgangsförderer (19) übergebbar sind.

12. Vorrichtung nach einem der Ansprüche 10 bis 11,
**dadurch gekennzeichnet,**
**dass** die Ausrichtstation (17) einen, insbesondere als Messerkantenband ausgebildeten, Endlosbandförderer (25) umfasst, der insbesondere überlappend mit dem Eingangsförderer (13) und/oder dem Ausgangsförderer (19) angeordnet ist, und/oder dass der Eingangsförderer (13) und/oder der Ausgangsförderer (19) einen Endlosbandförderer umfassen.

13. Vorrichtung nach einem der Ansprüche 10 bis 12,
**dadurch gekennzeichnet,**
**dass** die Ausrichtbewegungen (34, 36) der Produktauflage (21) von einer zusätzlichen Transportbewegung (37) der Produktauflage (21), die dazu dient, die Produkte (11) mittels der Ausrichtstation (17) in Richtung des Ausgangsförderers (19) zu befördern, unabhängig sind.

14. Vorrichtung nach einem der Ansprüche 10 bis 13,
**dadurch gekennzeichnet,**
**dass** die Produktauflage (21) eine Auflagefläche (22) für die Produkte (11) aufweist, die zu einer Drehung um eine im Wesentlichen senkrecht zur Auflagefläche (22) verlaufende Drehachse (23) und/oder zu einer Verschiebung in einer im Wesentlichen parallel zur Auflagefläche (22) verlaufenden Ebene, insbesondere quer zu einer Förderrichtung (39) des Eingangsförderers (13) und/oder zu einer eigenen Förderrichtung (37) ansteuerbar ist.

15. Vorrichtung nach einem der Ansprüche 10 bis 14,
**dadurch gekennzeichnet,**
**dass** wenigstens eine als Detektionsmittel dienende Bildaufnahmeeinrichtung, insbesondere ein Kamerasystem (27), mit dem die Fehlausrichtung detektierbar ist, eine Bildverarbeitungseinrichtung (29), der die aufgenommenen Bilddaten zuführbar sind, und eine mit der Bildverarbeitungseinrichtung (29) kommunizierende Steuer- und/oder Regeleinrichtung (31) vorgesehen sind, mit der bei einer detektierten Fehlausrichtung die Ausrichtstation (17) zur Durchführung der Ausrichtbewegungen (34, 36) ansteuerbar ist.

## Claims

1. A method for the alignment of food products (11),
in which food products (11) running in on an incoming conveyor (13) in a conveying direction (15) arrive at an alignment station (17) at which the products (11) are aligned and from which the aligned products (11) move to an outgoing conveyor (19);
wherein a misalignment of the products (11) with respect to a desired alignment is detected and the alignment of the products (11) takes place in dependence on the misalignment;
wherein the alignment of the products (11) takes place in that the products (11) lie on a product support (21) of the alignment station (17) and the product support (21) is controlled for the carrying out of alignment movements (34, 36);
wherein the product support (21) is moved as a whole relative to the outgoing conveyor (19) for the carrying out of the alignment movements (34, 36); and
wherein the alignment of the products (11) is done without relative movements between the products (11) and the product support (21).

2. A method in accordance with claim 1,
wherein the alignment movements (34, 36) of the product support (21) are superimposed on an additional transport movement (37) of the product support (21) which serves to convey the products (11) in the direction of the outgoing conveyor (19) by means of the alignment station (17), with the alignment movements (34, 36) in particular being independent of the additional transport movement (37); and/or wherein the product support (21) is controlled such that the alignment movements are in each case composed of a plurality of individual movements (34, 36), in particular of a rotary movement and of a translation movement, wherein the individual movements (34, 36) take place sequentially in time, superimposed on one another or partly overlapping one another.

3. A method in accordance with one of the preceding claims, wherein, for the alignment of the products (11), the product support (21) is rotated, in particular about an axis of rotation (23) extending substantially perpendicular to a support surface (22) of the product support (21) and/or is displaced, in particular in a plane extending substantially in parallel with a support surface (22) of the product support (21).

4. A method in accordance with any one of the preceding claims, wherein the products (11) are transferred directly to the alignment station (17) from the incoming conveyor (13)) and/or directly to the outgoing conveyor (19) from the alignment station (17); and/or wherein the products (11) are transported simultaneously in the direction of the outgoing conveyor (19) while they are being aligned.

5. A method in accordance with any one of the preceding claims, wherein a product transport taking place simultaneously with the alignment of the products (11) is likewise carried out by means of the alignment station (17); and/or wherein a product transport taking place simultaneously with the alignment of the products (11) is carried out by means of a continuous belt conveyor (25) on whose upper run the products (11) lie while they are being aligned and which is additionally controlled for the carrying out of the alignment movements (34, 36).

6. A method in accordance with any one of the preceding claims, wherein the alignment of the products (11) with respect to the desired alignment is determined by means of at least one image taking device (27); wherein the image data taken are supplied to an image processing device (29); and wherein, on a detected misalignment of the product (11), the alignment station (17) is controlled by means of a control and/or regulation device (31) which communicates with the image processing device (29) for the carrying out of alignment movements (34, 36) such that the misalignment is eliminated and the products (11) are oriented in accordance with the desired direction.

7. A method in accordance with any one of the preceding claims, wherein the alignment of the products (11) with respect to the desired alignment is determined a plurality of times sequentially in time in each case by means of at least one image taking device (27), with a further alignment procedure being carried out when, subsequent to a first alignment procedure in which a first image taking device (23) is involved, a misalignment of the products (11) is still detected by means of a further image taking device (27).

8. A method in accordance with any one of the preceding claims, wherein the alignment of the products (11) with respect to the desired alignment is only determined or is determined for the first time as long as the products (11) are still located on the incoming conveyor (13) or are already located on the product support (21) of the alignment station (17); and/or wherein the conveying direction (39) of the incoming conveyor (13) is used as the reference for the detection of a misalignment of the products (11), with in particular the conveying direction (41) of the outgoing conveyor (19) extending in parallel with the conveying direction (39) of the incoming conveyor (13).

9. A method in accordance with any one of the preceding claims,
wherein the products (11) are portions which are each formed by a plurality of food slices which are obtained by cutting up food products by means of a cutting apparatus, in particular by means of a high-speed slicer, arranged upstream of the incoming conveyor (13) viewed in the conveying direction.

10. An apparatus for the alignment of food products (11), in particular for the carrying out of the method in accordance with any one of the preceding claims,
having at least one incoming conveyor (13), at least one outgoing conveyor (19), at least one alignment station (17) which is arranged between the incoming conveyor (13) and the outgoing conveyor (19) and which has a product support (21) for the products (11), wherein the product support (21) is formed such that, on the carrying out of the alignment movements (34, 36), the product support (21) is movable while maintaining the relative position between the product support (21) and the products (11), **characterized in that**
the product support (21) is moved as a whole relative to the outgoing conveyor (19) for the carrying out of the alignment movements (34, 36),
wherein the apparatus has at least one detection means (27) with which a misalignment of the products (11) with respect to a desired alignment can be detected, and
wherein the product support is controllable for the carrying out of alignment movements (34, 36) in dependence on the misalignment to align the products (11) in accordance with the desired alignment.

11. An apparatus in accordance with claim 10,
**characterized in that**
the alignment station (17) is simultaneously a conveying device with which the products (11) can be moved in the direction of the outgoing conveyor (19); and/or **in that** the alignment station (17) is arranged between the incoming conveyor (13) and the outgoing conveyor (19) such that the products (11) can be transferred from the incoming conveyor (13) directly to the alignment station (17) and/or from the alignment station (17) directly to the outgoing conveyor (19).

12. An apparatus in accordance with one of the claims 10 to 11,
**characterized in that**
the alignment station (17) comprises a continuous belt conveyor (25), which is in particular formed as a knife-edge belt and which is in particular arranged overlapping with the incoming conveyor (13) and/or the outgoing conveyor (19); and/or **in that** the incoming conveyor (13) and/or the outgoing conveyor (19) comprise a continuous belt conveyor.

13. An apparatus in accordance with any one of the claims 10 to 12,
**characterized in that**
the alignment movements (34, 36) of the product support (21) are independent of an additional transport movement (37) of the product surface (21) which serves to convey the products (11) in the direction of the outgoing conveyor (19) by means of the alignment station (17).

14. An apparatus in accordance with any one of the claims 10 to 13,
**characterized in that**
the product support (21) has a support surface (22) for the products (11) which is controllable to make a rotation about an axis of rotation (23) extending substantially perpendicular to the support surface (22) and/or to make a displacement in a plane extending substantially in parallel with the support surface (22), in particular transverse to a conveying direction (39) of the incoming conveyor (13) and/or to a separate conveying direction (37).

15. An apparatus in accordance with any one of the claims 10 to 14,
**characterized in that**
at least one image taking device serving as a detection means, in particular a camera system (27), with which the misalignment can be detected, an image processing device (29) to which the image data taken can be supplied and a control and/or regulation unit (31) communicating with the image processing device (29) are provided, with the alignment station (17) being controllable by said control and/or regulating device for the carrying out of the alignment movements (34, 36) on a detected misalignment.

## Revendications

1. Procédé pour orienter des produits alimentaires (1), dans lequel des produits alimentaires (11) arrivant sur un convoyeur d'entrée (13) dans une direction de convoyage (15) parviennent à une station d'orientation (17) à laquelle les produits (11) sont orientés et de laquelle les produits orientés (11) parviennent à un convoyeur de sortie (19),
dans lequel on détecte une erreur d'orientation des produits (11) par rapport à une orientation de consigne et l'orientation des produits (11) a lieu en dépendance de l'erreur d'orientation,
dans lequel l'orientation des produits (11) a lieu en ce que les produits (11) reposent sur un support de produits (21) de la station d'orientation (17) et le support de produits (21) est piloté pour exécuter des mouvements d'orientation (34, 36),
dans lequel pour exécuter les mouvements d'orientation (34, 36) le support de produits (21) est déplacé en entier par rapport au convoyeur de sortie (19), et
dans lequel orientation des produits (11) s'effectue sans mouvement relatif entre les produits (11) et le support de produits (21).

2. Procédé selon la revendication 1,
dans lequel les mouvements d'orientation (34, 36) du support de produits (21) sont superposés à un mouvement de transport supplémentaire (37) du support de produits (21), qui sert à convoyer les produits (11) au moyen de la station d'orientation (17) en direction du convoyeur de sortie (19), dans lequel en particulier les mouvements d'orientation (34, 36) sont indépendants du mouvement de transport supplémentaire (37), et/ou en ce que le support de produits (21) est piloté de telle façon que les mouvements d'orientation se composent d'une pluralité de mouvements individuels (34, 36), en particulier d'un mouvement de rotation et d'un mouvement de translation, de sorte que les mouvements individuels (34, 36) ont lieu temporellement les uns après les autres, en superposition mutuelle, ou en superposition mutuelle partielle.

3. Procédé selon l'une des revendications précédentes,
dans lequel, pour orienter les produits (11), le support de produits (21) est tourné, en particulier autour d'un axe de rotation (23) s'étendant sensiblement perpendiculairement à une surface de support (22) du support de produit (21), et/ou mis en translation, en particulier dans un plan s'étendant sensiblement parallèlement à une surface de support (22) du support de produits (21).

4. Procédé selon l'une des revendications précédentes,
dans lequel les produits (11) sont transmis par le convoyeur d'entrée (13) directement à la station d'orientation (17) et/ou par la station d'orientation (17) directement au convoyeur de sortie (19), et/ou en ce que les produits (11) sont transportés, pendant qu'ils sont orientés, simultanément direction du convoyeur de sortie (19).

5. Procédé selon l'une des revendications précédentes,
dans lequel un transport des produits qui a lieu simultanément avec l'orientation des produits (11) est exécuté également au moyen de la station d'orientation (17), et/ou en ce qu'un transport des produits qui a lieu simultanément avec l'orientation des produits (11) est exécuté au moyen d'un convoyeur à courroie sans fin (25), sur le brin supérieur duquel les produits (11) reposent pendant qu'ils sont orientés, et qui est piloté additionnellement pour l'exécution des mouvements d'orientation (34, 36).

6. Procédé selon l'une des revendications précédentes,
dans lequel l'orientation des produits (11) par rapport à l'orientation de consigne est déterminée au moyen d'au moins un système de prise d'images (27), en ce que les données image prises sont transmises à un système de traitement d'image (29), et en ce que lors de la détection d'une erreur d'orientation des produits (11), la station d'orientation (17) est pilotée pour exécuter des mouvements d'orientation (34, 36), au moyen d'un système de commande et/ou de régulation (31) qui communique avec le système de traitement d'image (29), de telle façon que l'erreur d'orientation est éliminée et que les produits (11) sont orientés en correspondance de l'orientation de consigne.

7. Procédé selon l'une des revendications précédentes,
dans lequel l'orientation des produits (11) par rapport à l'orientation de consigne est déterminée plusieurs fois temporellement les unes après les autres à chaque fois au moyen d'au moins un système de prise d'images (27) et, lorsqu'à la suite d'une première opération d'orientation dans laquelle un premier système de prise d'images (27) est impliqué, on détecte encore une erreur d'orientation des produits (11) au moyen d'un autre système de prise d'images (27), on exécute une autre opération d'orientation.

8. Procédé selon l'une des revendications précédentes,
dans lequel orientation des produits (11) par rapport à l'orientation de consigne est détectée exclusivement ou pour la première fois aussi longtemps que les produits (11) se trouvent encore sur le convoyeur d'entrée (13) ou se trouvent déjà sur le support de produits (21) de la station d'orientation, et/ou en ce que l'on utilise comme référence pour la détection d'une erreur d'orientation des produits (11) la direction de convoyage (39) du convoyeur d'entrée (13), et la direction de convoyage (41) du convoyeur de sortie (19) s'étend en particulier parallèlement à la direction de convoyage (39) du convoyeur d'entrée (13).

9. Procédé selon l'une des revendications précédentes,
dans lequel les produits (11) sont des portions qui sont respectivement formées par une pluralité de tranches de produits alimentaires qui sont obtenues par découpe de produits alimentaires au moyen d'un dispositif de coupe, en particulier d'une trancheuse à haute vitesse, agencé en amont, vu dans la direction de convoyage (15), du convoyeur d'entrée (13).

10. Appareil pour orienter des produits alimentaires (11), en particulier pour mettre en oeuvre le procédé selon l'une des revendications précédentes,
comprenant au moins un convoyeur d'entrée (13), au moins un convoyeur de sortie (19), au moins une station d'orientation (17) agencée entre le convoyeur d'entrée (13) et le convoyeur de sortie (19), qui comprend un support de produits (21) pour les produits (11),
dans lequel le support de produits (21) est réalisé de telle façon que lors de l'exécution des mouvements d'orientation (34, 36) le support de produits (21) est déplaçable en conservant la position relative entre le support de produits (21) et les produits (11),
**caractérisé en ce que**
pour exécuter les mouvements d'orientation (34, 36) le support de produits (21) est déplaçable en entier par rapport au convoyeur de sortie (19),
dans lequel le dispositif comprend au moins un moyen de détection (27), et
dans lequel le support de produit est susceptible d'être piloté pour exécuter des mouvements d'orientation (34, 36) en dépendance de l'erreur d'orientation, afin d'orienter les produits (11) en correspondance de l'orientation de consigne.

11. Appareil selon la revendication 10,
**caractérisé en ce que**
la station d'orientation (17) est simultanément un système de convoyage avec lequel les produits (11) sont déplaçables en direction du convoyeur de sortie (19), et/ou **en ce que** la station d'orientation (17) est agencée entre le convoyeur d'entrée (13) et le convoyeur de sortie (19) de telle façon que les produits (11) peuvent être transmis par le convoyeur d'entrée (13) directement à la station d'orientation (17), et/ou par la station d'orientation (17) directement au convoyeur de sortie (19).

12. Appareil selon l'une des revendications 10 et 11,
**caractérisé en ce que** la station d'orientation (17) inclut un convoyeur à courroie sans fin (25), réalisé en particulier comme courroie à arête en forme de couteau, qui est agencé en particulier en chevauchement avec le convoyeur d'entrée (13), et/ou avec le convoyeur de sortie (19), et/ou en ce que le convoyeur d'entrée (13) et/ou le convoyeur de sortie (19) incluent un convoyeur à courroie sans fin.

13. Appareil selon l'une des revendications 10 à 12,
**caractérisé en ce que** les mouvements d'orientation (34, 36) du support de produits (21) sont indépendants d'un mouvement de transport supplémentaire (37) du support de produits (21), qui sert à convoyer les produits (11) au moyen de la station d'orientation (17) en direction du convoyeur de sortie (19).

14. Appareil selon l'une des revendications 10 à 13,
**caractérisé en ce que** le support de produits (21) comprend une surface de support (22) pour les produits (11), qui est susceptible d'être pilotée pour une rotation autour d'un axe de rotation (23) s'étendant sensiblement perpendiculairement à la surface de support (22), et/ou pour une translation dans un plan s'étendant sensiblement parallèlement à la surface de support (22), en particulier transversalement à une direction de convoyage (39) du convoyeur d'entrée (13), et/ou à une direction de convoyage propre (37).

15. Appareil selon l'une des revendications 10 à 14,
**caractérisé en ce qu'**il est prévu au moins un système de prise d'images, en particulier un système à caméra (27), servant de moyen de détection, au moyen duquel l'erreur d'orientation est susceptible d'être détectée, un système de traitement d'image (29) auquel les données images prises peuvent être amenées, et un système de commande et/ou de régulation (31) qui communique avec le système de traitement d'image (29) et au moyen duquel, lors de la détection d'une erreur d'orientation, la station d'orientation (17) peut être pilotée pour exécuter les mouvements d'orientation (34, 36).
